(19) Europäisches Patentamt

European Patent Office

Office européen des brevets

(11) **EP 3 335 366 B1**

(12) **EUROPEAN PATENT SPECIFICATION**

(45) Date of publication and mention of the grant of the patent:
**09.03.2022 Bulletin 2022/10**

(21) Application number: **16736086.6**

(22) Date of filing: **05.07.2016**

(51) International Patent Classification (IPC):
*H04L 9/00* *(2022.01)*

(52) Cooperative Patent Classification (CPC):
**H04L 9/002;** H04L 2209/046

(86) International application number:
**PCT/EP2016/065837**

(87) International publication number:
**WO 2017/025252 (16.02.2017 Gazette 2017/07)**

(54) **METHOD TO SECURE KECCAK ALGORITHM AGAINST SIDE-CHANNEL ATTACKS**

VERFAHREN ZUR SICHERUNG DES KECCAK-ALGORITHMUS GEGEN SEITENKANALANGREIFE

PROCÉDÉ POUR SÉCURISER UN ALGORITHME KECCAK CONTRE LES ATTAQUES PAR CANAUX AUXILIAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2015 EP 15306289**

(43) Date of publication of application:
**20.06.2018 Bulletin 2018/25**

(73) Proprietor: **Thales Dis France SAS 92190 Meudon (FR)**

(72) Inventors:
• **ROUSSELLET, Mylène**
  **13881 Gemenos Cedex (FR)**
• **VILLEGAS, Karine**
  **13881 Gemenos Cedex (FR)**

(74) Representative: **Thomas, Christine Marie Catherine**
  **Thales Dis France SA**
  **Intellectual Property Department**
  **6, rue de la Verrerie**
  **92190 Meudon (FR)**

(56) References cited:
**WO-A1-2012/146550**

• **"Note on side-channel attacks and their countermeasures", , 1 May 2000 (2000-05-01), XP055242407, Retrieved from the Internet: URL:http://keccak.noekeon.org/NoteSideChannelAttacks.pdf [retrieved on 2016-01-18]**
• **Joan Daemen ET AL: "Bitslice Ciphers and Power Analysis Attacks" In: "Grid and cooperative computing - GCC 2004 : third international conference, Wuhan, China, October 21 - 24, 2004IN: Lecture notes in computer science , ISSN 0302-9743 ; Vol. 3251", 1 January 2001 (2001-01-01), SPRINGER VERLAG, DE 032548, XP055242408, ISSN: 0302-9743 ISBN: 978-3-642-15019-7 vol. 1978, pages 134-149, DOI: 10.1007/3-540-44706-7_10, section 5**

**Description**

## FIELD OF THE INVENTION

The present invention relates to a method to secure a cryptographic algorithm performing operations on a matrix of n*n words, this cryptographic algorithm necessitating to, when the matrix of data is masked using a mask matrix, performing operations on the masked matrix and on a mask matrix.

More particularly, the invention concerns the security of Keccak implementation on all products for embedded systems, like smart cards, Mobile platforms, Network servers and desktop PCs but also present an interest for algorithms to be applied to matrix of n*n words.

The invention also pertains to relates to a method to recover an intermediate matrix masked using a securization method of the invention and to a device implementing said method.

## BACKGROUND OF THE INVENTION

The Keccak algorithm by its structure is sensitive to side channel attacks as soon as a sensitive value is present in the input state. This algorithm has been selected as future SHA3 and also as the base of TUAK algorithm which should be an alternative at MILENAGE for secure element authentication. It is necessary to find solution to protect data that will be processed by it.

As a classical countermeasure to prevent side-channel attacks, we need to mask data manipulated during Keccak rounds. The straight forward method consists in generating a mask of the size of input data, meaning 1600 bits for Keccak, and doing the algorithm twice: one for data as masked and one for the mask.

Given the large state handled in Keccak algorithm, securing it against side-channel attacks requires the generation and management of a large random value to mask its large intermediate variables.

Up to now none relevant publications has been done on the way to practically and efficiently secure Keccak. In practice masking of data requires such an amount of resources that it prevents it to be implemented.

Further alternative and advantageous solutions would, accordingly, be desirable in the art.

## SUMMARY OF THE INVENTION

The present invention aims at accelerating the secure implementation with the same level of security.

The present invention is defined, in its broadest sense, as a method according to claim 1.

The invention reduces the size of the random values needed to however mask the sensitive values of the Keccak state. With the present invention, a new masking mechanism with a limited number of masks for the same level of security is thus described in order to limit the size of memory used and not to slow down performances. A countermeasure fully adapted to Keccak algorithm is thus proposed. It is however independent to the configuration and usage of Keccak as it can be used for Hash algorithms, authentication algorithms etc.

The invention enables a drastic memory cost optimization: 576 bits only are needed to store the mask instead of 1600 bits, with same level of security. The invention also offers the possibility to update the mask easily for each round by just replacing random values by new ones. The impact of the implementation of the invention on performances, code and RAM, is very small

The combination used to construct the mask matrix present the advantage not to harm the randomization of the values, while being very simple to reverse.

According to a particular feature, at least 5 values in the mask matrix are obtained by rotation of a random value.

Rotations also offer convenient properties in terms of reversibility while assuring a correct security level for the masking of data. According to the invention, 9 random values are generated, said random values being combined in the mask matrix.

This number of random values is optimal in terms of efficiency and security. Indeed it consists in generating 10 random values but with one equal to zero. The 10 random values are then combined to form a 5*5 matrix.

Said algorithm is Keccak algorithm, said matrix being of 5*5 size.

The invention aims particularly this algorithm which is sensitive to side channel attack and thus crucially benefit from a masking of the invention.

This method further increases the interest of the invention as the use of a degraded set of operations enables to further accelerate the processing. Indeed all operations are not applied but only those who are significant regarding the structure of the mask. Some calculations are thus mutualized.

The present invention at least relates to a device according to claim 2.

Such a device is able to perform Keccak algorithm while fulfilling high security and performance requirements.

To the accomplishment of the foregoing and related ends, one or more embodiments comprise the features hereinafter fully described and particularly pointed out in the claims.

## BRIEF DESCRIPTION OF THE DRAWINGS

The following description and the annexed drawing set forth in detail certain illustrative aspects and are indicative of but a few of the various ways in which the principles of the embodiments may be employed. Other advantages and novel features will become apparent from the following detailed description when considered in conjunction with the drawing and the disclosed embodiments are intended to include all such aspects and their equivalents.

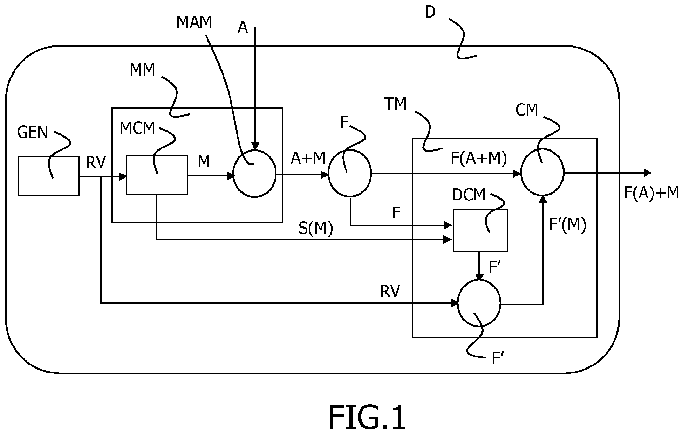

- Figure 1 schematically represents a device of the invention and illustrates the functioning of the method of the invention.

## DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made . For clarity, only those elements and steps which are useful to the understanding of the present invention have been shown in the drawing and will be described.

Figure 1 schematically shows a device D of the invention. This device D is requested to process a matrix A comprising sensitive values. Those values are here represented as originated external to the device but these values can also be originated in the device itself. Besides the device D comprises an algorithm F, or at least a function of a cryptographic algorithm performing operations on the matrix A of n*n words. The cryptographic algorithm F necessitates to, when the matrix of data is masked using a mask matrix, performing operations on the masked matrix and on a mask matrix in order to be able to recover the results of the application of the algorithm on matrix A.

Matrix A is here a state of Keccak which can be seen as a matrix of 5x5 words of 64 bits:

$$A = \begin{pmatrix} a_{0,0} & a_{1,0} & a_{2,0} & a_{3,0} & a_{4,0} \\ a_{0,1} & a_{1,1} & a_{2,1} & a_{3,1} & a_{4,1} \\ a_{0,2} & a_{1,2} & a_{2,2} & a_{3,2} & a_{4,2} \\ a_{0,3} & a_{1,3} & a_{2,3} & a_{3,3} & a_{4,3} \\ a_{0,4} & a_{1,4} & a_{2,4} & a_{3,4} & a_{4,4} \end{pmatrix}$$

Below is given an analysis of Keccak functions in relation with the masking of the matrix, all of them, alone or together, being potentially the function F as used as a reference in the specification and in drawings.

Function Theta consists at first on a XOR of all the elements of one column. This implies to have different masks for the 5 elements of a column, meaning at least one mask per row.

In a second step of this function, two of these results are combined together with a XOR, one with a rotation of one bit. If the masks of all columns are identical, let say equal to $t$, this second step transform the mask as $t \oplus (t>>>1)$ The mask will have a high Hamming Weight. To keep good entropy on the masks, it is necessary to have different masks per column.

Function Rho consists on a rotation of an element itself by a constant which is different per element. At this step, as no elements are combined there is no risk to remove a mask.

Function Pi consists on a permutation of the elements of the state. There is thus no risk to remove a mask so no influence on the choice of the number of masks.

Function Chi has the following formula: $a' = a \oplus ((b \oplus 0 \times FF) \ \& \ c)$ with a, b, c being 3 elements of the state matrix A. If masks are denoted u, v, w the previous formulae applied on data masked becomes:

$$x = (a \oplus u) \oplus ( (b \oplus 0xFF \oplus v) \ \& \ (c \oplus w) )$$

According to the following property:

$$(b \oplus 0xFF \oplus v)\&(c \oplus w) =$$

$$((b \oplus 0xFF)\&c) \oplus (v\&w) \oplus ((b \oplus 0xFF \oplus v)\&w) \oplus (v\&(c \oplus w))$$

It is thus obtained:

$$x = (a \oplus u) \oplus ((b \oplus 0xFF)\&c) \oplus (v\&w) \oplus ((b \oplus 0xFF \oplus v)\&w) \oplus (v\&(c \oplus w)).$$

To obtain a data a' masked with a random value, the correction to apply on x is:

$$x \oplus ((b \oplus 0xFF \oplus v)\&w) \oplus (v\&(c \oplus w)) \qquad = (a \oplus u) \oplus ((b \oplus 0xFF)\&c) \oplus (v\&w)$$
$$= a' \oplus u \oplus (v\&w)$$

This implies to have $u \neq (v\&w)$, meaning all masks different per elements.

Function Iota consists on a simple XOR with a constant value depending on the round number which has not influence on masking.

Below is disclosed the masking scheme as proposed according to the invention. The invention consists in generating 9 random values of 64 bits to mask the full state, which represent 576 bits of mask instead of 1600 bits. For this purpose the device D comprises a random value generator GEN.

The invention thus requires to define 10 values RV, for example: $r_0$, $r_1$, $r_2$, $r_3$, $r_4$, which can be qualified as the rows' masks, and $t_0$, $t_1$, $t_2$, $t_3$, $t_4$, which can be qualified as the columns' masks, with $t_0=0$. Only the random values RV are stored in a memory of the device for unmasking purpose which saves memory.

Then the device D comprises a masking module MM adapted to perform some specific actions.

According to the invention, the state matrix of the masks M is build using combination of several of these values.

For example:

$$M = \begin{pmatrix} r_0 & r_0 \oplus t_1 & r_0 \oplus t_2 & r_0 \oplus t_3 & r_0 \oplus t_4 \\ r_1 & r_1 \oplus t_1 & r_1 \oplus t_2 & r_1 \oplus t_3 & r_1 \oplus t_4 \\ r_2 & r_2 \oplus t_1 & r_2 \oplus t_2 & r_2 \oplus t_3 & r_2 \oplus t_4 \\ r_3 & r_3 \oplus t_1 & r_3 \oplus t_2 & r_3 \oplus t_3 & r_3 \oplus t_4 \\ r_4 & r_4 \oplus t_1 & r_4 \oplus t_2 & r_4 \oplus t_3 & r_4 \oplus t_4 \end{pmatrix}$$

For this purpose, a mask construction module MCM is thus reachable by the masking module MM. The output mask M is provided to a mask application module MAM. To mask the input state A, matrix M is thus constructed and applied by a XOR operation to the Keccak state matrix A.

With the invention, from pure implementation point of view, it is thus not necessary to store the complete matrix but only the 9 masks of 64 bits, 576 bits. Each 64-bit word of input state A can be masked by one or two of the 9 elements ri and/or ti, with i from 0 to 4, knowing the structure of M.

Then the algorithm F is applied to the masked matrix A+M. It results in F(A+M).

To unmask this result in order to obtain F(A)+M and then F(A) by simple exclusive disjunction with M reconstituted from random values as stored, the present invention further proposes the device D to comprise a transformation module TM having a degraded function calculation module DCM adapted to output a degraded set of operations F' to be applied to the random values RV as stored in the device D to obtain a degraded result F'(M) which can be used in an equivalent way as F(M). The degraded set of operations F' is obtained from the algorithm F, from the random values RV and from information S(M) on the structure of the mask from the random values RV. Once this degraded function F' is applied on the random values, a degraded result F'(M) is obtained. It is then provided to a calculation module CM which calculates F(A+M)+F'(M) which replaces F(A+M)+F(M). Both are equal to F(A)+M. The mask is then easily removable by performing an exclusive disjunction using M on this result.

The strategy used to mask the complete execution of Keccak algorithm consists in applying each function of Keccak on the masked state and applying a "correction" corresponding to the degraded set of operation F' on the state to recover a state masked by M.

The correction step can be performed after each function or at the end of a round. For a round of Keccak, the cost of correction step taking into account the structure of the mask according to the invention is lower than applying a second time all functions to the matrix M.

Below is given the mask evolution in Keccak functions. At the Input function, the input state is masked with M.

During function Theta, the first step of Theta computes values C0, C1, C2, C3 and C4, being the XOR of the 5 elements of a column. A value Cj ($j \in [0,4]$) is thus masked with $r_0 \oplus r_1 \oplus r_2 \oplus r_3 \oplus r_4 \oplus t_j$.

At the second step, an element (A+M)[i][j] is updated with the XOR of (C{i-1} $\oplus$ (C{i+1 }>>> 1)).

The mask of each element in column j is corrected after Theta function by:

$$r_0 \oplus r_1 \oplus r_2 \oplus r_3 \oplus r_4 \oplus t_{j-1} \ \oplus \ ((r_0 \oplus r_1 \oplus r_2 \oplus r_3 \oplus r_4 \oplus t_{i+1})>>>1) \ = \ r_0 \oplus r_1 \oplus r_2 \oplus r_3 \oplus r_4 \ \oplus$$

$$((r_0 \oplus r_1 \oplus r_2 \oplus r_3 \oplus r_4)>>>1) \ \oplus t_{i-1} \ \oplus \ (t_{i+1}>>>1).$$

A state masked by M is thus recovered at the end of Theta function.

For function Rho, a rotation is applied to each element of the matrix (A+M)[i][j] independently. The mask correction consists in a XOR with the initial mask ($r_j \oplus t_i$) followed by a XOR with the rotation of this mask ($r_j \oplus t_i$).

During function Pi, all the elements of the state are permuted. Applying the permutation to the mask would require more memory to store the permuted mask. To avoid extra storage, the mask is directly corrected on the fly. For one element, a mask of destination is first applied and then the mask as initially applied is removed. The order of mask application is important to avoid a data in clear.

For the function Chi, referring to the presented above formula, it can be noted that data a is masked with $u \oplus (v \& w)$. The correction of the mask consists only in removing $(v \& w)$. In this way a state masked by M is recovered. An element (A+M)[i][j] is thus corrected by $(r_j \oplus t_{i+1}) \& (r_j \oplus t_{i+2})$.

Function Iota does not require any manipulation of masks. At the output of the round 1, the state matrix is masked with M.

It is here noted that it is possible to update the mask at each round by taking 9 new random values and applying them to the mask and the current state.

To validate the proposed masking scheme, practical experiments have been performed by computing correlation between a secret value, noted TOPc in TUAK algorithm set, and a secret Key and intermediate results of functions θ, ρ, π, χ masked according to the invention. Correlation between a random value and intermediate results has been analyzed to identify the measure of noise.

As a conclusion, correlation results obtained for the masking scheme according to the invention are low, at the same level as noise. Theoretically, it means that no correlation on data is possible. 9 Masks of 64 bits are sufficient to mask the Keccak state. It is here further noted that this scheme can be easily adapted to a 32-bit core by splitting each 64-bit mask $r_i$, $t_i$ in two parts of 32 bits.

The described embodiment uses an exclusive disjunction as combination between at least two of 9 generated random values. It requires the generation of 10 random values including one equal to zero. Only the storage of the 9 random values is required according to the invention. They are then used in recovery calculations and these recovery calculations are simplified because of the construction of the mask according to the invention.

It is however here noted that the number of random values can be different. A larger number can be used in cases where resources are large enough to support such a generation. It is awaited that the larger the number of random values, the better are the properties in terms of correlation of the values in the mask.

The knowledge of the used combination enables to simplify calculations to recover data. In particular calculations can be mutualized for several values in the matrix. Thus the correction function applied to the mask matrix M is not the function itself as applied to the masked matrix but a modified one F'.

F' is such that F(A+M) + F'(M) gives F(A) + M. The masked result is thus easily obtained by applying an exclusive disjunction using M. Unmasking is preferably done at the end of the algorithm but it can also be done after each round. In any case, the unmasking is rendered much easier with the invention.

The use of the exclusive disjunction as a combination enables, contrarily to other Boolean operations, not to harm the random properties of the values in the mask. Furthermore operations to recover the masked data are simple while using an exclusive disjunction. It avoids complex calculations to be done.

However rotations could be used in addition with the invention. It slightly complexifies the recovery calculation but can offer interesting additional randomization. Compatibility with linear and non-linear operations within the algorithm is assured using exclusive disjunctions and, possible rotations.

For example, while defining rol(a,x) the rotation of a by x bits to the left and generating 5 indexes $i_0$, $i_1$, $i_2$, $i_3$, $i_4$ between 0 and 63, all different, the mask matrix M becomes, with $i_0 = 0$:

$$M = \begin{pmatrix} r_0 & rol(r_1,i_1) & rol(r_2,i_2) & rol(r_3,i_3) & rol(r_4,i_4) \\ r_1 & rol(r_2,i_1) & rol(r_3,i_2) & rol(r_4,i_3) & rol(r_0,i_4) \\ r_2 & rol(r_3,i_1) & rol(r_4,i_2) & rol(r_0,i_3) & rol(r_1,i_4) \\ r_3 & rol(r_4,i_1) & rol(r_0,i_2) & rol(r_1,i_3) & rol(r_2,i_4) \\ r_4 & rol(r_0,i_1) & rol(r_1,i_2) & rol(r_2,i_3) & rol(r_3,i_4) \end{pmatrix}$$

In the above detailed description, reference is made to the accompanying drawings that show, by way of illustration, specific embodiments in which the invention may be practiced. These embodiments are described in sufficient detail to enable those skilled in the art to practice the invention.

**Claims**

1. Method for securing against side channel attack an execution of a Keccak cryptographic algorithm computation on a state matrix of 5*5 64-bit words (A), said method comprising the steps of:

   - generating (GEN) a maximum of 5*4 random values (RV) of the size of the words of the state matrix (A) for the masking of the data;
   - constructing (MCM) a mask matrix M whose elements are all distinct as

   $$M = \begin{pmatrix} r_0 & r_0 \oplus t_1 & r_0 \oplus t_2 & r_0 \oplus t_3 & r_0 \oplus t_4 \\ r_1 & r_1 \oplus t_1 & r_1 \oplus t_2 & r_1 \oplus t_3 & r_1 \oplus t_4 \\ r_2 & r_2 \oplus t_1 & r_2 \oplus t_2 & r_2 \oplus t_3 & r_2 \oplus t_4 \\ r_3 & r_3 \oplus t_1 & r_3 \oplus t_2 & r_3 \oplus t_3 & r_3 \oplus t_4 \\ r_4 & r_4 \oplus t_1 & r_4 \oplus t_2 & r_4 \oplus t_3 & r_4 \oplus t_4 \end{pmatrix}$$ $r_0, ..., r_4$ and $t_1, ..., t_4$ being said random values, or as $M =$

   $$\begin{pmatrix} r_0 & rol(r_1,i_1) & rol(r_2,i_2) & rol(r_3,i_3) & rol(r_4,i_4) \\ r_1 & rol(r_2,i_1) & rol(r_3,i_2) & rol(r_4,i_3) & rol(r_0,i_4) \\ r_2 & rol(r_3,i_1) & rol(r_4,i_2) & rol(r_0,i_3) & rol(r_1,i_4) \\ r_3 & rol(r_4,i_1) & rol(r_0,i_2) & rol(r_1,i_3) & rol(r_2,i_4) \\ r_4 & rol(r_0,i_1) & rol(r_1,i_2) & rol(r_2,i_3) & rol(r_3,i_4) \end{pmatrix}$$ $r_0, ..., r_4$ being said random values and $i_1, ..., i_4$ indexes between 0 and 63, all different;
   - masking the state matrix (A) by applying a XOR operation with said constructed mask matrix (M) thereby obtaining a masked state matrix (A+M);
   - for each function ($F \in \{\theta, \rho, \pi, \chi, \iota\}$) in a round of the Keccak cryptographic algorithm or for the Keccak cryptographic algorithm round function (F) :

      • applying the function(F) to the masked state matrix (A+M) to obtain an intermediate calculated matrix (F(A+M));
      • constructing (DCM) from the function (F) a set of degraded operations (F') to be applied on values in the mask matrix (M)
      • applying the set of degraded operations (F') to the mask matrix (M) to obtain correction values (F'(M));
      • recovering (CM) as the new masked state matrix, the result (F(A)+M) of applying the function (F) to the state matrix (A) masked by the mask matrix (M) using the correction values (F'(M)) and the intermediate calculated matrix (F(A+M)).

2. Device (D) implementing a Keccak cryptographic algorithm computation on a state matrix of 5*5 64-bit words (A), said device (D) comprising :

   - at least a random values generator (GEN) to generate a maximum of 5*4 random values (RV) of the size of the words of the state matrix (A) for the masking of the data,

- a masking construction module (MCM) to construct the mask matrix M whose elements are all distinct as *M*

$$= \begin{pmatrix} r_0 & r_0 \oplus t_1 & r_0 \oplus t_2 & r_0 \oplus t_3 & r_0 \oplus t_4 \\ r_1 & r_1 \oplus t_1 & r_1 \oplus t_2 & r_1 \oplus t_3 & r_1 \oplus t_4 \\ r_2 & r_2 \oplus t_1 & r_2 \oplus t_2 & r_2 \oplus t_3 & r_2 \oplus t_4 \\ r_3 & r_3 \oplus t_1 & r_3 \oplus t_2 & r_3 \oplus t_3 & r_3 \oplus t_4 \\ r_4 & r_4 \oplus t_1 & r_4 \oplus t_2 & r_4 \oplus t_3 & r_4 \oplus t_4 \end{pmatrix}$$

$r_0, ..., r_4$ and $t_1, ..., t4$ being said random values, or as *M =*

$$\begin{pmatrix} r_0 & rol(r_1, i_1) & rol(r_2, i_2) & rol(r_3, i_3) & rol(r_4, i_4) \\ r_1 & rol(r_2, i_1) & rol(r_3, i_2) & rol(r_4, i_3) & rol(r_0, i_4) \\ r_2 & rol(r_3, i_1) & rol(r_4, i_2) & rol(r_0, i_3) & rol(r_1, i_4) \\ r_3 & rol(r_4, i_1) & rol(r_0, i_2) & rol(r_1, i_3) & rol(r_2, i_4) \\ r_4 & rol(r_0, i_1) & rol(r_1, i_2) & rol(r_2, i_3) & rol(r_3, i_4) \end{pmatrix}$$

$r_0, ..., r_4$ being said random values and $i_1, ...,$ $i_4$ indexes between 0 and 63, all different

- a mask application module (MAM) to mask the state matrix (A) by applying a XOR operation with said constructed mask matrix (M) thereby obtaining a masked state matrix (A+M),
- a transformation module (TM) having a degraded function calculation module (DCM) and a calculation module (CM),

and for each function ($F \in \{\theta, \rho, \pi, \chi, \iota\}$) in a round of the Keccak cryptographic algorithm or for the Keccak cryptographic algorithm round function (F) :

• said device (D) being configured for applying the function (F) to the masked state matrix (A+M) to obtain an intermediate calculated matrix (F(A+M));
• said degraded function calculation module (DCM) being configured for constructing from the function (F) a set of degraded operations (F') to be applied on values in the mask matrix (M),
• said transformation module (TM) being configured for applying the set of degraded operations (F') to the mask matrix (M) to obtain correction values (F'(M));
• said calculation module (CM) being configured for recovering as the new masked state matrix, the result (F(A)+M) of applying the function (F) to the state matrix (A) masked by the mask matrix (M) using the correction values (F'(M)) and the intermediate calculated matrix (F(A+M)).

**Patentansprüche**

1. Verfahren zum Sichern einer Ausführung einer Berechnung eines kryptografischen Keccak-Algorithmus auf einer Zustandsmatrix von 5*5 64-Bit-Wörtern (A) gegen einen Seitenkanalangriff, das Verfahren umfassend die Schritte:

- Erzeugen (GEN) eines Maximums von 5*4 Zufallswerten (RV) der Größe der Wörter der Zustandsmatrix (A)

$$M = \begin{pmatrix} r_0 & r_0 \oplus t_1 & r_0 \oplus t_2 & r_0 \oplus t_3 & r_0 \oplus t_4 \\ r_1 & r_1 \oplus t_1 & r_1 \oplus t_2 & r_1 \oplus t_3 & r_1 \oplus t_4 \\ r_2 & r_2 \oplus t_1 & r_2 \oplus t_2 & r_2 \oplus t_3 & r_2 \oplus t_4 \\ r_3 & r_3 \oplus t_1 & r_3 \oplus t_2 & r_3 \oplus t_3 & r_3 \oplus t_4 \\ r_4 & r_4 \oplus t_1 & r_4 \oplus t_2 & r_4 \oplus t_3 & r_4 \oplus t_4 \end{pmatrix}$$

für das Maskieren der Daten; verschieden sind, weil , wobei $r_0, ...,$

$$M = \begin{pmatrix} r_0 & rol(r_1, i_1) & rol(r_2, i_2) & rol(r_3, i_3) & rol(r_4, i_4) \\ r_1 & rol(r_2, i_1) & rol(r_3, i_2) & rol(r_4, i_3) & rol(r_0, i_4) \\ r_2 & rol(r_3, i_1) & rol(r_4, i_2) & rol(r_0, i_3) & rol(r_1, i_4) \\ r_3 & rol(r_4, i_1) & rol(r_0, i_2) & rol(r_1, i_3) & rol(r_2, i_4) \\ r_4 & rol(r_0, i_1) & rol(r_1, i_2) & rol(r_2, i_3) & rol(r_3, i_4) \end{pmatrix}$$

$r_4$ und $t_1, ..., t_4$ die Zufallswerte sind, oder weil M = , wobei $r_0, ..., r_4$ die Zufallswerte sind und $i_1, ..., i_4$ Indizes zwischen 0 und 63 sind, wobei alle unterschiedlich sind;
- Maskieren der Zustandsmatrix (A) durch Anwenden einer XOR-Operation mit der erstellten Maskenmatrix (M), wodurch eine maskierte Zustandsmatrix (A+M) erhalten wird;

$\ddot{(}, \text{I}\})$ in

- für jede Funktion (F∈{θ, ρ, π, X, ⌐......⌐}) in einer Runde des kryptografischen Keccak-Algorithmus oder für die Rundenfunktion (F) des kryptografischen Keccak-Algorithmus:

    • Anwenden der Funktion (F) auf die maskierte Zustandsmatrix (A+M), um eine berechnete Zwischenmatrix (F(A+M)) zu erhalten;
    • Erstellen (DCM), aus der Funktion (F), eines Satzes von verminderten Operationen (F'), die auf Werte in der Maskenmatrix (M) anzuwenden sind;
    • Anwenden des Satzes von verminderten Operationen (F') auf die Maskenmatrix (M), um Korrekturwerte (F'(M)) zu erhalten;
    • Wiederherstellen (CM), als die neue maskierte Zustandsmatrix, des Ergebnisses (F(A)+M) des Anwendens der Funktion (F) auf die Zustandsmatrix (A), maskiert durch die Maskenmatrix (M), unter Verwendung der Korrekturwerte (F'(M)) und der berechneten Zwischenmatrix (F(A+M)).

2.   Vorrichtung (D), die eine Berechnung eines kryptografischen Keccak-Algorithmus auf einer Zustandsmatrix von 5\*5 64-Bit-Wörtern (A) implementiert,
die Vorrichtung (D) umfassend:

- mindestens einen Zufallswertgenerator (GEN) zum Erzeugen eines Maximums von 5\*4 Zufallswerten (RV) der Größe der Wörter der Zustandsmatrix (A) für das Maskieren der Daten,

$$\begin{pmatrix} r_0 & r_0 \oplus t_1 & r_0 \oplus t_2 & r_0 \oplus t_3 & r_0 \oplus t_4 \\ r_1 & r_1 \oplus t_1 & r_1 \oplus t_2 & r_1 \oplus t_3 & r_1 \oplus t_4 \\ r_2 & r_2 \oplus t_1 & r_2 \oplus t_2 & r_2 \oplus t_3 & r_2 \oplus t_4 \\ r_3 & r_3 \oplus t_1 & r_3 \oplus t_2 & r_3 \oplus t_3 & r_3 \oplus t_4 \\ r_4 & r_4 \oplus t_1 & r_4 \oplus t_2 & r_4 \oplus t_3 & r_4 \oplus t_4 \end{pmatrix}$$, wobei $r_0, ..., r_4$ und $t_1,...,t_4$ die Zufallswerte sind, oder weil $M =$

$$\begin{pmatrix} r_0 & rol(r_1, i_1) & rol(r_2, i_2) & rol(r_3, i_3) & rol(r_4, i_4) \\ r_1 & rol(r_2, i_1) & rol(r_3, i_2) & rol(r_4, i_3) & rol(r_0, i_4) \\ r_2 & rol(r_3, i_1) & rol(r_4, i_2) & rol(r_0, i_3) & rol(r_1, i_4) \\ r_3 & rol(r_4, i_1) & rol(r_0, i_2) & rol(r_1, i_3) & rol(r_2, i_4) \\ r_4 & rol(r_0, i_1) & rol(r_1, i_2) & rol(r_2, i_3) & rol(r_3, i_4) \end{pmatrix}$$, wobei $r_0, ... r_4$ die Zufallswerte und $i_1, ..., i_4$

Indizes zwischen 0 und 63 sind, wobei alle unterschiedlich sind,
- ein Maskenanwendungsmodul (MAM) zum Maskieren der Zustandsmatrix (A) durch Anwenden einer XOR-Operation mit der erstellten Maskenmatrix (M), wodurch eine maskierte Zustandsmatrix (A+M) erhalten wird,
- ein Transformationsmodul (TM), das ein Berechnungsmodul einer verminderten Funktion (DCM) und ein Berechnungsmodul (CM) aufweist,

I}) in

und für jede Funktion (F∈{θ, ρ, n, X, ⌐ ⌐}) in einer Runde des kryptografischen Keccak-Algorithmus oder für die Rundenfunktion (F) des kryptografischen Keccak-Algorithmus:

    • wobei die Vorrichtung (D) zum Anwenden der Funktion (F) auf die maskierte Zustandsmatrix (A+M), um eine berechnete Zwischenmatrix (F(A+M)) zu erhalten, konfiguriert ist;
    • wobei das Berechnungsmodul einer verminderten Funktion (DCM) zum Erstellen, aus der Funktion (F), eines Satzes von verminderten Operationen (F'), die auf Werte in der Maskenmatrix (M) anzuwenden sind, konfiguriert ist,
    • wobei das Transformationsmodul (TM) zum Anwenden des Satzes von verminderten Operationen (F') auf die Maskenmatrix (M), um Korrekturwerte (F'(M)) zu erhalten, konfiguriert ist;
    • wobei das Berechnungsmodul (CM) zum Wiederherstellen, als die neue maskierte Zustandsmatrix, des Ergebnisses (F(A)+M) des Anwendens der Funktion (F) auf die Zustandsmatrix (A), maskiert durch die Maskenmatrix (M), unter Verwendung der Korrekturwerte (F'(M)) und der berechneten Zwischenmatrix (F(A+M)) konfiguriert ist.

**Revendications**

1. Procédé pour sécuriser vis-à-vis d'une attaque par canal auxiliaire une exécution d'un calcul d'algorithme cryptographique de Keccak sur une matrice d'état de 5*5 mots de 64 bits (A), ledit procédé comprenant les étapes consistant à :

   - générer (GEN) un maximum de 5*4 valeurs aléatoires (RV) de la taille des mots de la matrice d'état (A) pour le masquage des données ;
   - construire (MCM) une matrice de masque M dont les éléments sont tous distincts en tant que

$$M = \begin{pmatrix} r_0 & r_0 \oplus t_1 & r_0 \oplus t_2 & r_0 \oplus t_3 & r_0 \oplus t_4 \\ r_1 & r_1 \oplus t_1 & r_1 \oplus t_2 & r_1 \oplus t_3 & r_1 \oplus t_4 \\ r_2 & r_2 \oplus t_1 & r_2 \oplus t_2 & r_2 \oplus t_3 & r_2 \oplus t_4 \\ r_3 & r_3 \oplus t_1 & r_3 \oplus t_2 & r_3 \oplus t_3 & r_3 \oplus t_4 \\ r_4 & r_4 \oplus t_1 & r_4 \oplus t_2 & r_4 \oplus t_3 & r_4 \oplus t_4 \end{pmatrix}$$

   $r_0, \dots r_4$ et $t_1, \dots, t_4$ étant lesdites valeurs aléatoires, ou en tant

   que $M = \begin{pmatrix} r_0 & rol(r_1, i_1) & rol(r_2, i_2) & rol(r_3, i_3) & rol(r_4, i_4) \\ r_1 & rol(r_2, i_1) & rol(r_3, i_2) & rol(r_4, i_3) & rol(r_0, i_4) \\ r_2 & rol(r_3, i_1) & rol(r_4, i_2) & rol(r_0, i_3) & rol(r_1, i_4) \\ r_3 & rol(r_4, i_1) & rol(r_0, i_2) & rol(r_1, i_3) & rol(r_2, i_4) \\ r_4 & rol(r_0, i_1) & rol(r_1, i_2) & rol(r_2, i_3) & rol(r_3, i_4) \end{pmatrix}$ $r_0, \dots r_4$ étant lesdites valeurs aléatoires et

   $i_1, \dots, i_4$ des indices entre 0 et 63, tous différents ;
   - masquer la matrice d'état (A) en appliquant une opération OU exclusif avec ladite matrice de masque construite (M) ce qui permet d'obtenir une matrice d'état masquée (A+M) ;
   - pour chaque fonction ($F \in \{\theta, \rho, \pi, X, l\}$) dans une itération de l'algorithme cryptographique de Keccak ou pour la fonction d'itération de l'algorithme cryptographique de Keccak (F) :

      • appliquer la fonction (F) à la matrice d'état masquée (A+M) pour obtenir une matrice calculée intermédiaire (F(A+M)) ;
      • construire (DCM) à partir de la fonction (F) un ensemble d'opérations dégradées (F') à appliquer sur des valeurs dans la matrice de masque (M)
      • appliquer l'ensemble d'opérations dégradées (F') à la matrice de masque (M) pour obtenir des valeurs de correction (F'(M)) ;
      • récupérer (CM) en guise de nouvelle matrice d'état masquée, le résultat (F(A)+M) de l'application de la fonction (F) à la matrice d'état (A) masquée par la matrice de masque (M) en utilisant les valeurs de correction (F'(M)) et la matrice calculée intermédiaire (F(A+M)).

2. Dispositif (D) implémentant un calcul d'algorithme cryptographique de Keccak sur une matrice d'état de 5*5 mots de 64 bits (A),
   ledit dispositif (D) comprenant :

   - au moins un générateur de valeurs aléatoires (GEN) pour générer un maximum de 5*4 valeurs aléatoires (RV) de la taille des mots de la matrice d'état (A) pour le masquage des données,

   - un module de construction de masquage (MCM) pour construire la matrice de masque M dont les éléments sont tous distincts en tant que M = $\begin{pmatrix} r_0 & r_0 \oplus t_1 & r_0 \oplus t_2 & r_0 \oplus t_3 & r_0 \oplus t_4 \\ r_1 & r_1 \oplus t_1 & r_1 \oplus t_2 & r_1 \oplus t_3 & r_1 \oplus t_4 \\ r_2 & r_2 \oplus t_1 & r_2 \oplus t_2 & r_2 \oplus t_3 & r_2 \oplus t_4 \\ r_3 & r_3 \oplus t_1 & r_3 \oplus t_2 & r_3 \oplus t_3 & r_3 \oplus t_4 \\ r_4 & r_4 \oplus t_1 & r_4 \oplus t_2 & r_4 \oplus t_3 & r_4 \oplus t_4 \end{pmatrix}$ , $r_0, \dots r_4$ et $t_1, \dots, t_4$ étant lesdites

$$M = \begin{pmatrix} r_0 & rol(r_1,i_1) & rol(r_2,i_2) & rol(r_3,i_3) & rol(r_4,i_4) \\ r_1 & rol(r_2,i_1) & rol(r_3,i_2) & rol(r_4,i_3) & rol(r_0,i_4) \\ r_2 & rol(r_3,i_1) & rol(r_4,i_2) & rol(r_0,i_3) & rol(r_1,i_4) \\ r_3 & rol(r_4,i_1) & rol(r_0,i_2) & rol(r_1,i_3) & rol(r_2,i_4) \\ r_4 & rol(r_0,i_1) & rol(r_1,i_2) & rol(r_2,i_3) & rol(r_3,i_4) \end{pmatrix}$$

valeurs aléatoires, ou en tant que $M =$ ... $r_0, \dots r_4$ étant lesdites valeurs aléatoires et $i_1, \dots, i_4$ des indices entre 0 et 63, tous différents

- un module d'application de masque (MAM) pour masquer la matrice d'état (A) en appliquant une opération OU exclusif avec ladite matrice de masque construite (M) ce qui permet d'obtenir une matrice d'état masquée (A+M),
- un module de transformation (TM) ayant un module de calcul de fonction dégradée (DCM) et un module de calcul (CM),

et pour chaque fonction ($F \in \{\theta, \rho, \pi, X, I\}$) dans une itération de l'algorithme cryptographique de Keccak ou pour la fonction d'itération de l'algorithme cryptographique de Keccak (F) :

  • ledit dispositif (D) étant configuré pour appliquer la fonction (F) à la matrice d'état masquée (A+M) pour obtenir une matrice calculée intermédiaire (F(A+M)) ;
  • ledit module de calcul de fonction dégradée (DCM) étant configuré pour construire à partir de la fonction (F) un ensemble d'opérations dégradées (F') à appliquer sur des valeurs dans la matrice de masque (M),
  • ledit module de transformation (TM) étant configuré pour appliquer l'ensemble d'opérations dégradées (F') à la matrice de masque (M) pour obtenir des valeurs de correction (F'(M)) ;
  • ledit module de calcul (CM) étant configuré pour récupérer en guise de nouvelle matrice d'état masquée, le résultat (F(A)+M) de l'application de la fonction (F) à la matrice d'état (A) masquée par la matrice de masque (M) en utilisant les valeurs de correction (F'(M)) et la matrice calculée intermédiaire (F(A+M)).

FIG.1